# EUROPEAN PATENT APPLICATION

(11) **EP 2 138 972 A1**
(43) Date of publication of application: **30.12.2009**
(21) Application number: 08158871.7
(22) Date of filing: 24.06.2008
(51) Int. Cl.: G06Q 40/00

(54) **Method for automatically classifying money transfers made on a bank account**

(71) Applicant: Duchamp, Nicolas, 2124 Luxembourg (LU)
(72) Inventor: Duchamp, Nicolas, 2124 Luxembourg (LU)
(74) Representative: Lecomte, Didier

(57) **Abstract**

The invention is directed to method for automatically classifying the transactions on a bank account. This is achieved by mapping the identification codes of the firms with which the transactions are operated with the sectorial code of each firm and to map these sectional codes with categories of the transactions. This allows an automatic classification of the expenses of an individual. The transactions are summed in each category for a predetermined period of time and can be therefore presented in an optimised fashion to the bank account's holder. These sums can be compared to average values or corresponding values of the same individual for a preceding period of ime. The result of the comparison can be expressed by a number and/or a sign.

## Description

### BACKGROUND OF THE INVENTION

The present invention is directed to a method for automatically classifying the money transactions operated on a bank account, more particularly, to the automatic generation of reports of the expenses and credits of a personal bank account on a predetermined period of time.

The invention is directed to a data treatment process, made of several steps aiming to classify automatically each expense of a bank's client in relevant expenses types or categories.

### STATE OF THE ART

US 5,748,908 discloses a method of automatic classification and categorization of consumer and business expenditures activated by a unique classification card. This card initializes a transaction terminal only once prior to the first classified sales transaction. Subsequently, each input data amount from credit/debit card sales transactions will be classified accordingly. These categorized amounts will then be further processed by a credit/debit card issuer. The classification card is unique and specific of each merchant and features the merchant's name and a binary sequential code of a specific expenditure classification (relative to the products or services he sells) and the merchant's point of sales terminal serial number. This permits an automatic categorization of all expenses made at a merchant under the conditions that (i) the payment is made by credit/debit card, (ii) the merchant has a classification card according to the teaching of this document, and (iii) the classification card is inserted .in the terminal prior the credit/debit card for the payment.

These conditions are quite limiting in the sense that the expenses made by other means than with a credit/debit card are not categorized and that only the expenses made at merchants having a classification card will be categorized.

US 2004/0215565 A1 is directed to an interactive electronic data processing software utility banking system which integrates individual account transactions into running balance statements and budget reports. It requires from the user to interactively categorize all account transactions and allows the user to customize, change or create categories.

US 2007/0198409 A1 addresses the reporting of bank account statements to the account holder by e-mail but fails to consider any categorization of the transactions.

Alternatively, an individual person who wants to have an analytical overview of its current expenses in its day-to-day life has to use a specific software (for example the software Microsoft Money) and has to enter manually or semi-manually its expenses in the software. In a second time the software permits to produce graphics and comparisons between one quarter and the previous one or between one quarter and a target budget.

### SUMMARY OF THE INVENTION

The present invention seeks to solve the above mentioned problems by providing a method for automatically classifying transactions made on a bank account with a debtor or creditor firm, the method comprising, for each transaction, the steps of:
- identifying the public registration code of the firm with which the transaction is made, the code being a unique identification code of the firm and available to the transaction data;
- identifying a public sectorial code of the firm which identifies the sectorial activity of the firm;
- mapping the transaction with the identification code and the sectorial code;
- assigning a category to the transaction based on the sectorial code assigned thereto.

Preferably a category list is mapped with a public sectorial code list in order to automatically assign a category to each transaction.

Preferably the mapping between some sectorial codes and some categories is conditioned by the amount of the transaction and/or the debit or credit nature of the transaction.

In a preferred embodiment, a subtype list is mapped with a public sectorial code list and the automatic assignment of a category to a transaction is based on the subtype assigned to the transaction.

Still in a preferred embodiment, a category list is mapped with the subtype list.

Still in a preferred embodiment, the mapping between the category list and the subtype list is dependent on the amount of the transaction and/or the debit or credit nature of the transaction.

Generally, the transactions are debits of the bank account representing the expenses of the account's holder.

The transaction can comprise credit/debit card payments, electronic payments, transfers and automated payments.

The mapping between some sectorial codes and some category codes can be conditioned by the amount of the transaction.

The mapping between some sectorial codes and some category codes can be conditioned by the debit or credit nature of the money transfer.

The method can comprise the additional step of summing by category the amounts of the transactions for a predetermined period of time.

Preferably the sums of the transactions by category are compared with the corresponding sums of one or more preceding periods.

Preferably the sums of the transactions by category are compared with corresponding average results.

In a preferred embodiment the average results to which the sums of the transactions are compared by category correspond to the summed transactions of a virtual average person sharing with the bank account's holder a series of common or similar features.

Preferably the features shared with the virtual average person are comprised in the following not exhaustive list: age, gender, professional activity category, family situation, place of living, health state.

The features shared with the virtual average person can be categorized for the purpose of matching with the bank account's holder.

The comparison between the sums of the transactions by category with corresponding amounts can be expressed by means of at least a number and/or a sign for each category.

The method can comprise the additional step that an electronic report is generated and that the categorizing of the transactions can be manually modified.

The invention would permit the bank to generate automatically this kind of reports every quarter for example.

### EXPLANATIONS OF THE DRAWINGS

Figure 1 corresponds to block diagrams illustrating the process of the method according to the invention through the different tables.
Figures 2, 3 and 4 are different sections of a report which is generated for a given period (in this case the third quarter of 2008) in accordance with the present invention.

### BEST MODE FOR CURRYING OUT THE INVENTION

The invention is a new data treatment process. The aim is to use the identification code of a firm (the SIREN code in France, for example) that is transmitted by the debtor's bank to the client's bank for each transaction. For each client, the bank has accumulated every expense with the SIREN code of the debtor.

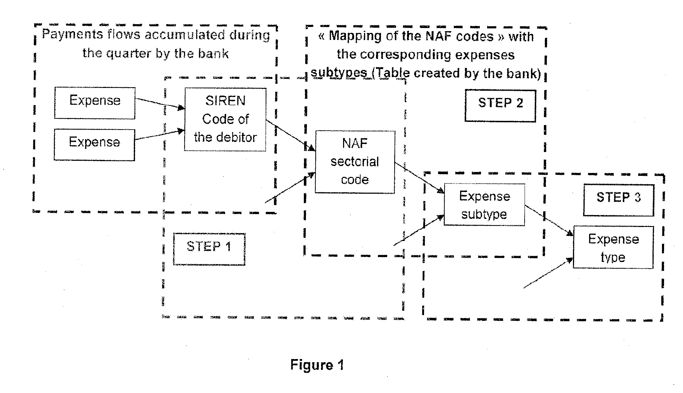

Figure 1 illustrates the principle of the invention where the steps 1, 2 and 3 which are described more in details here below are schematically represented by dashed boxes.

In a first step, the bank has to ask for an updated list of every firms in the country, with the corresponding SIREN code and the corresponding sectorial code (the NAF code in France and the NAICS code in the USA, for example). This list can be provided by a public contributor (In France, for example, several Internet websites provide all the French firms with SIREN and NAF codes. The information comes from the INSEE, but is not free of charges).

By using this list, the bank can find the sectorial code, corresponding for each expense.

In a second step, the bank has to create a mapping table for each sectorial code to attribute a relevant expense subtype. The bank will use this table to attribute an expense subtype for each expense.

For example, all the expenses with firms having a sectorial code related to telecommunications will receive the subtype "telecom". All the expenses with firms having a sectorial code related to gas, electricity or water will receive the subtype "utilities", etc.

In a third step, the bank generates a final expense type or category considering the expense subtype and the amount (positive or negative).

Most of the expense types have only one subtype. But a subtype can be ambiguous (for example an expense in a Virgin Store will have a subtype "Culture OR House equipments", and will then be mapped with a different expense type, considering the amount of the expense. Above 250 € the expense will be classified as "House equipments"; below 250 € it will be classified as "Culture".

The bank would have to create this table very precisely, considering that there are, for example, 712 NAF codes in France created by the INSEE. For example:
- 52.1D Supermarkets => "Food OR House equipments"
- 52.1 F Hypermarkets => "Food OR House equipments"
- 52.2A Fruits & vegetables => « Food »
- 52.2C Meat => « Food »
- 52.2E Fish & shells => « Food »
- 52.2G Bread & cakes => « Food »
- 52.2J Bars =>" Bars, cigarettes, papers"
- 52.2L Tobacco =>" Bars, cigarettes, papers"
- 52.3A Chemistry shops => « Health »
- 52.3E Beauty => « Beauty »
- 52.4C Clothings =>"Clothings"
- 52.4E Shoes =>"Clothings"
- 52.4H Furniture => "House equipments"
- 52.4L Domestic appliances & televisions => "House equipments"
- 52.4R Papers & books =>" Bars, cigarettes, papers"

It has to be fulfilled and completed by the bank. One expense type or category corresponds with several subtypes, depending of the amount of the expense.

The correlation or mapping between the expense types (or categories) and the subtypes is illustrated in table 1.

**Table 1**

| | Expense Type | Subtype1 | Min1 | Max 1 | Subtype2 | Min2 | Max2 | Subtype3 | Min3 | Max3 | Max2 |
|---|---|---|---|---|---|---|---|---|---|---|---|
| 1 | Salary/pensio n | All except Health | 0 | 9999 | | | | | | | |
| 2 | Rental | Rental | -9999 | 0 | Individuals | -9999 | 0 | | | | |
| 3 | Taxes | Taxes | -9999 | 0 | | | | | | | |
| 4 | Food, supermarkets | Food | -9999 | 0 | Food OR House equipments (ex: supermarkets) | -350 | 0 | | | | |
| 5 | House equipments | House equipments | -9999 | 0 | Food OR House equipments (ex: supermarkets) | -9999 | -350 | Culture OR House equipment s (ex: Virgin) | -9999 | -250 | |
| 6 | Culture | Culture | -9999 | 0 | Culture OR House equipments (ex: Virgin) | -250 | 0 | | | | |
| 7 | Transportation | Transportation | -9999 | 0 | Transportation OR Traveling (ex:train) | -40 | 0 | | | | |
| 8 | Traveling | Traveling | -9999 | 0 | Transportation OR Traveling (ex : train) | -9999 | -40 | | | | |
| 9 | Utilities | Utilities | -9999 | 0 | | | | | | | |
| 10 | Telecoms | Telecoms | -9999 | 0 | | | | | | | |
| 11 | Clothings | Clothings | -9999 | 0 | | | | | | | |
| 12 | Insurance | Insurance | -9999 | 0 | | | | | | | |
| 13 | Bars, cigarettes, papers | Bars, cigarettes, papers | -9999 | 0 | | | | | | | |
| 14 | Health | Health | -9999 | 0 | | | | | | | |
| 15 | Health repayments | Health | 0 | 9999 | | | | | | | |
| 16 | Beauty | Beauty | -9999 | 0 | | | | | | | |
| 17 | Restaurants | Restaurant s | -9999 | 0 | | | | | | | |
| 18 | Night out | Night out | -9999 | 0 | | | | | | | |
| 19 | Cash withdrawals | Cash withdrawal s | -9999 | 0 | | | | | | | |

Example: Mr Smith buys a television at Auchan (hypermarket) at 455€ by credit card. The bank of Mr Smith receives a confirmation from the bank of Auchan:
Name: Auchan
Siren code: 410409460
Amount : 455€

At the end of the quarter, the invention consists of following the process:
**STEP 1:** in the list provided by the INSEE, the **SIREN code:** 410409460 is associated with the Name "Auchan" and with the sectorial **NAF code** :521 F - Hypermarket.
**STEP2:** in the table "Mapping of the NAF Codes" created by the bank, the NAF Code 521F is mapped with the **expense subtype:** "Food OR House equipments". The expense subtype has been created because this category of store can generate food expenses or house equipment expenses. The choice between both will be made in the third step.
**STEP3:** in the table « Mapping subtypes », the expense subtype is mapped with the **expense type** "House equipments" because the amount is above 350€ - below 350€ the expense type would have been "Food, supermarkets".

This is why Mr Smith can read in its quarter reporting in the category "House equipments" an expense of 455€ made at Auchan (please see presentation above).

The expenses accumulated by the banks may be credit cards operations, cash withdrawals, checks, transfers, automated payments or other payments means.

SIREN and NAF codes are French codes. The names of the codes will differ in other countries.

The SIREN code is the HR number in Germany, the CIF/NIF in Spain, the CCIAA in Italy.

The NAF code is the WZ in Germany, the CNAE in Spain, the ATECO in Italy.

If the expense comes from an individual person, the SIREN code will be replaced by its personal identification number (the SS number in France), and then the sectorial NAF sector will be "individuals".

The process may not be perfect and generate some misclassification of the expenses - especially for expenses in generic and large stores. This is why it may be recommended to send to the client an electronic version of the expenses report (on Excel for example), in order that it may be able to reclassify a few expenses by himself, if he detects a mistake in the classification.

The presentation of the expenses (above) suggests that the bank can compare the expenses of its client with the expenses of the last quarter, but also with the average expenses for a citizen with same gender, same age, same family situation and same worker category. The bank would find these average expenses through public data (these data are free on the website of the INSEE in France, for example).

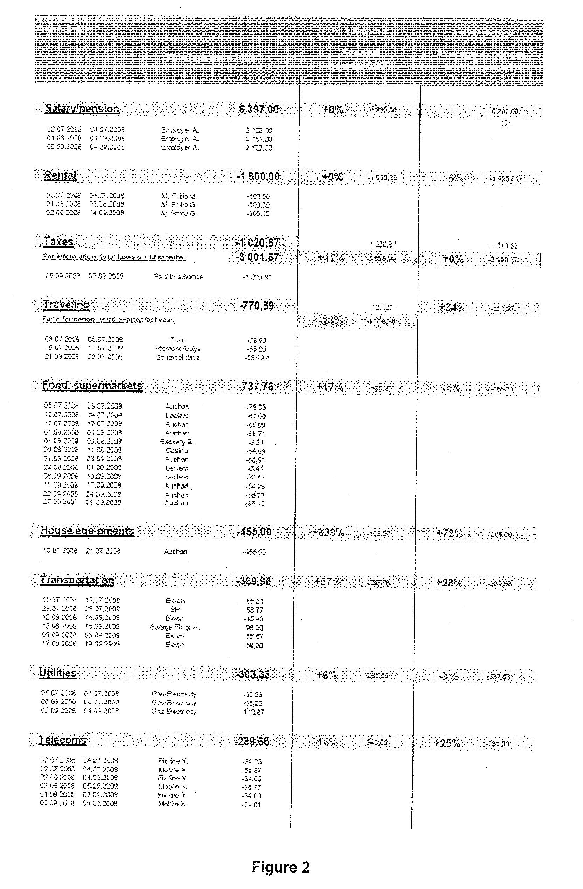

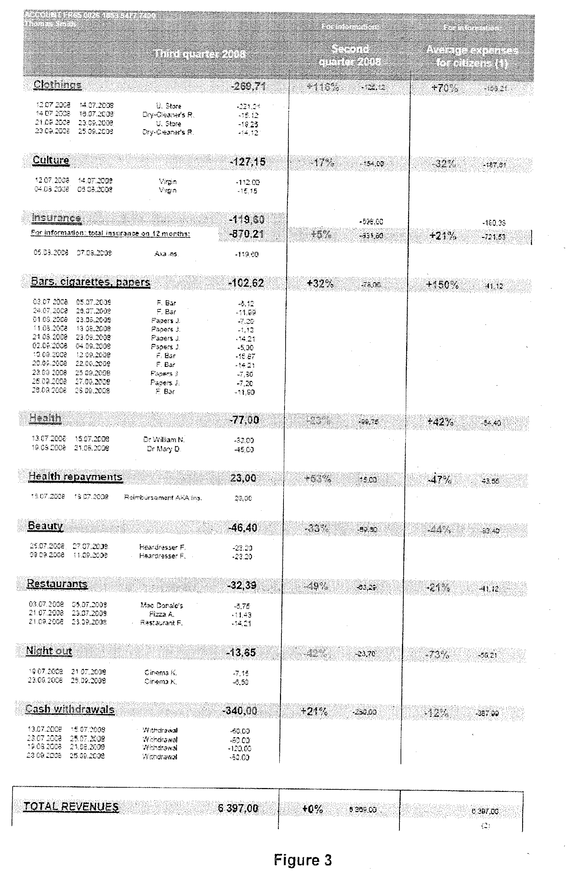

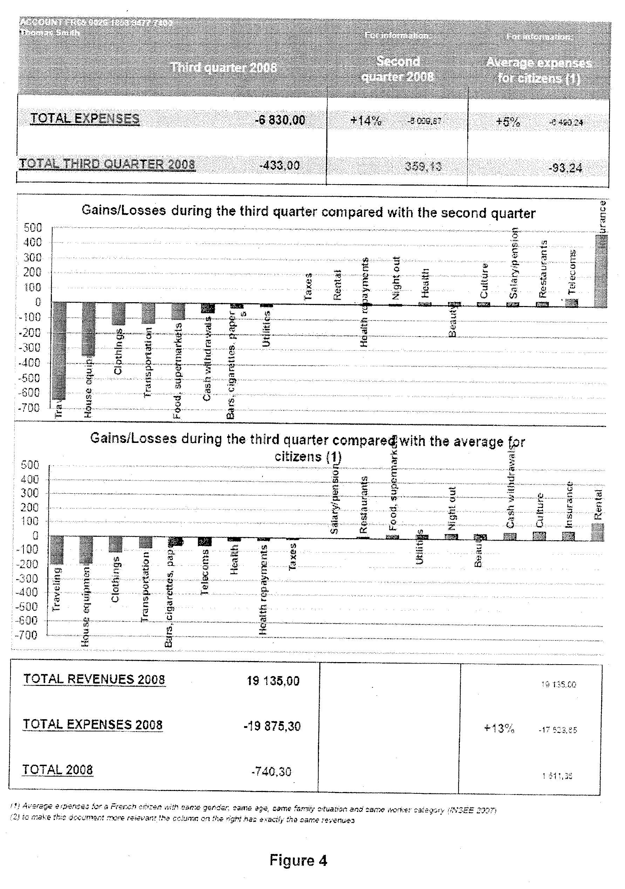

The invention allows the bank to generate automatically this kind of reports every quarter as illustrated in figures 2, 3 and 4 where an analytical presentation of the expenses of an individual is presented. Figures 2, 3 and 4 form a single report for the third quarter of 2008. The transactions of this period are classified by categories or expense types, like "Salary/pension", "Rental", "Taxes", ... , and listed in the left column. The sums of these transactions of this period and for each type are also represented (in bold). Additionally, two additional optional columns are present for additional information purposes only. The left column indicates the variation in percent for each type in relation with the previous period, i.e. in this case for the second quarter 2008. The right column indicates for each type a comparison expressed in percent with the corresponding transactions of an average citizen. At the bottom of the report, the total of the revenues and the total of the expenses are presented as well as the difference between these two amounts. For even more clarity, the variations of the different summed transactions by type or category compared with the previous period are presented in a histogram. The same is done for the variations of the same summed transactions by type or category compared with an average citizen. Eventually, the total revenues and total expenses for the year to date and the difference between these two amounts are also presented at the very bottom of the report. This provides to the bank account holder a very clear overview of his financial situation.

The aim of this invention is to create a new service from the banks to their clients. The bank would execute, for example, quarterly all the data treatments in order to deliver automatically a complete and analytical overview of the client expenses, and send this report to the client by mail and/or email.

This way, the client can try to manage its expenses with a better global overview. The client can have a chronological view of its expenses, and can compare its expenses with a "virtual person" who would have the same profile.

The invention should allow the bank to provide a new service to every customer, especially those who can hardly deal with expenses management or those who are over indebted.

The present invention is typically carried out by a computer program. Here is an example of such a program

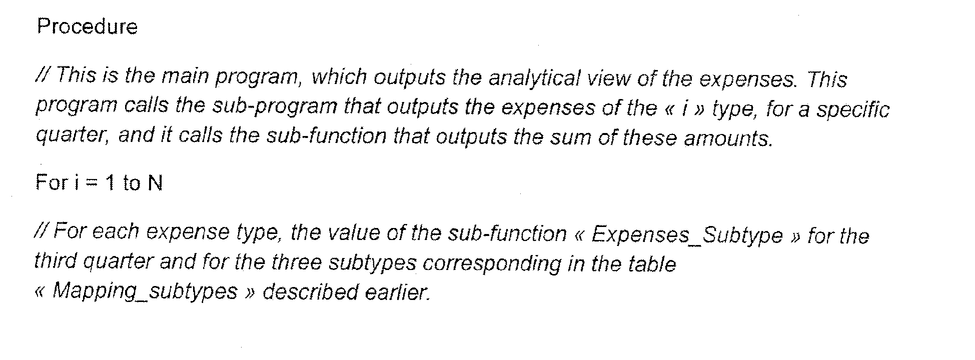

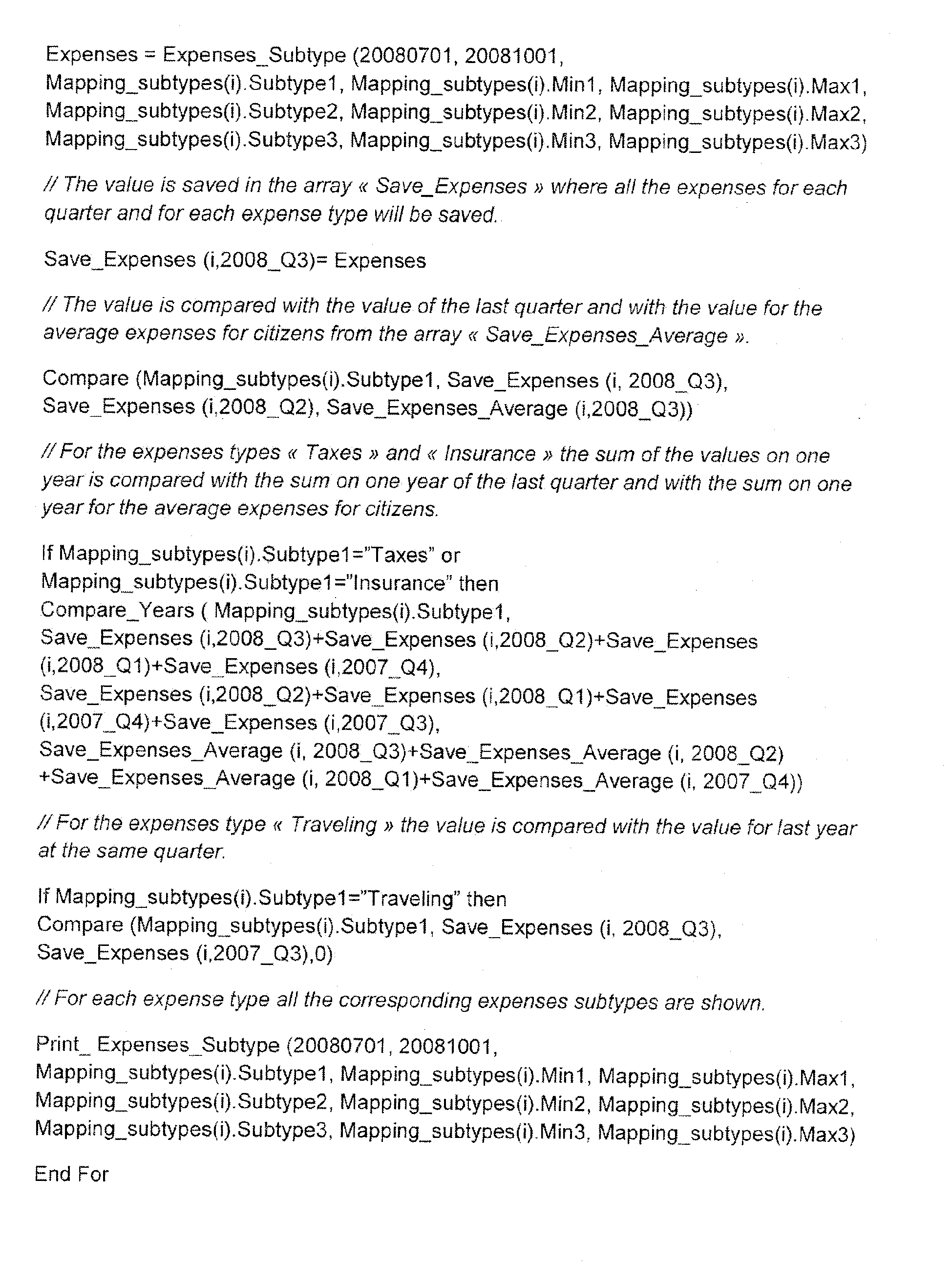

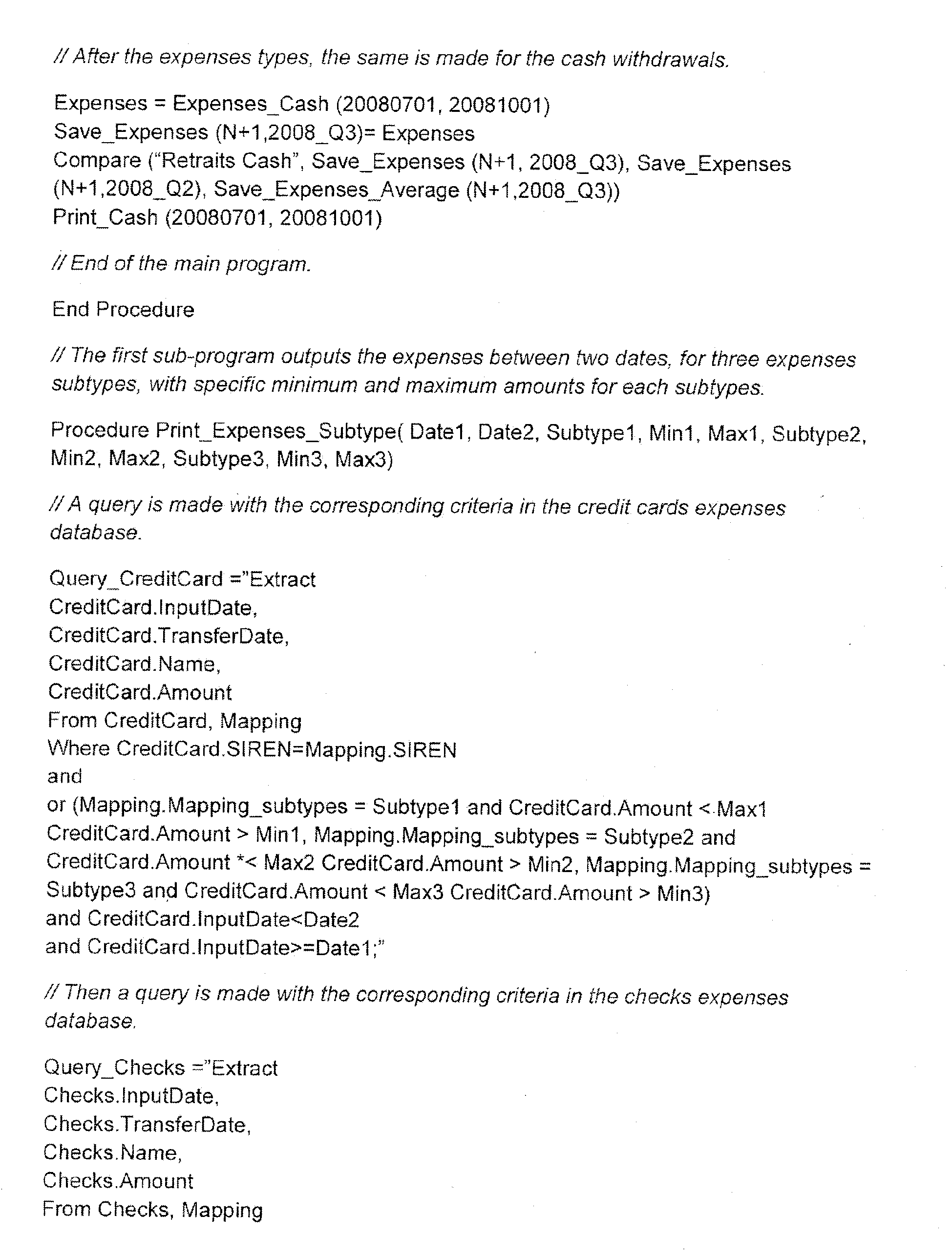

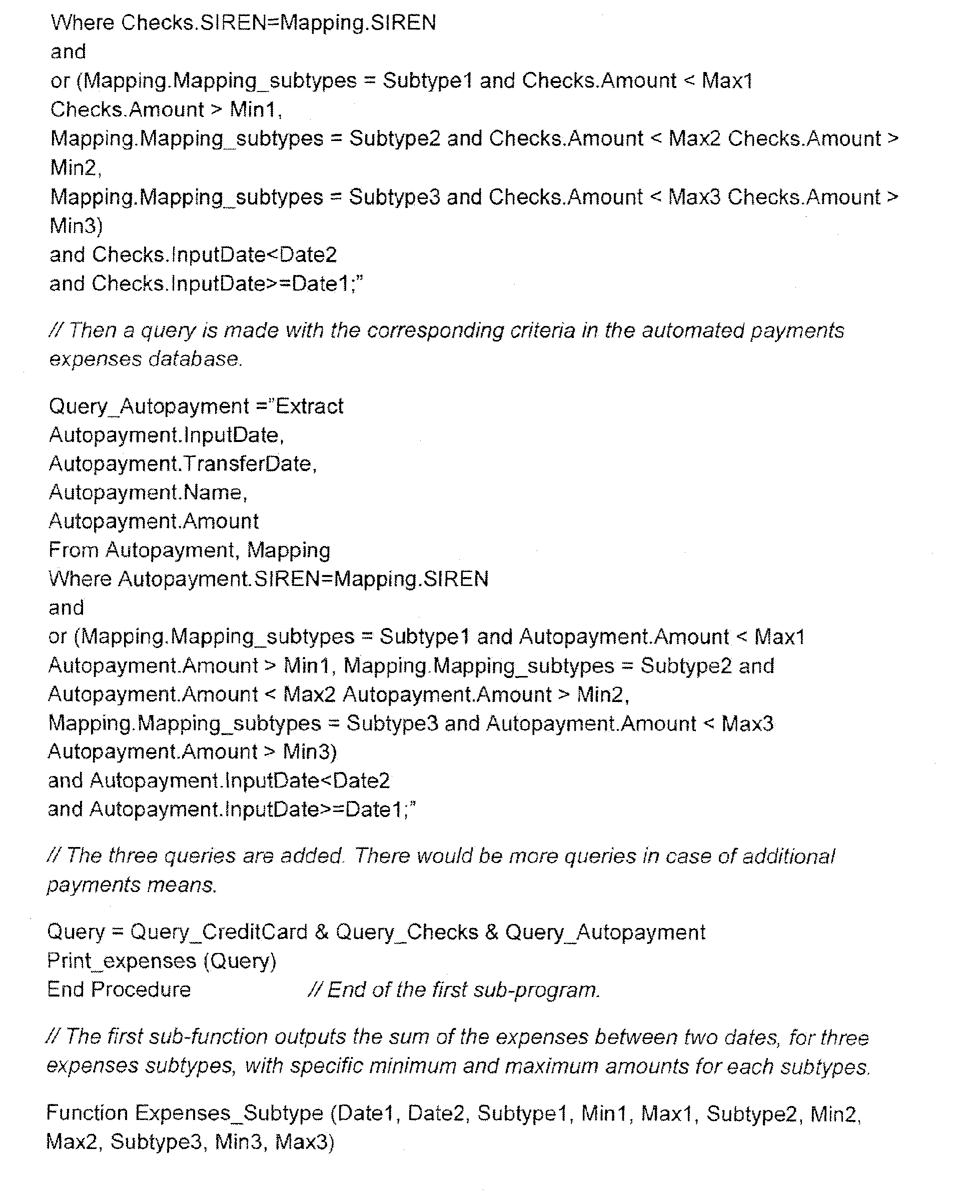

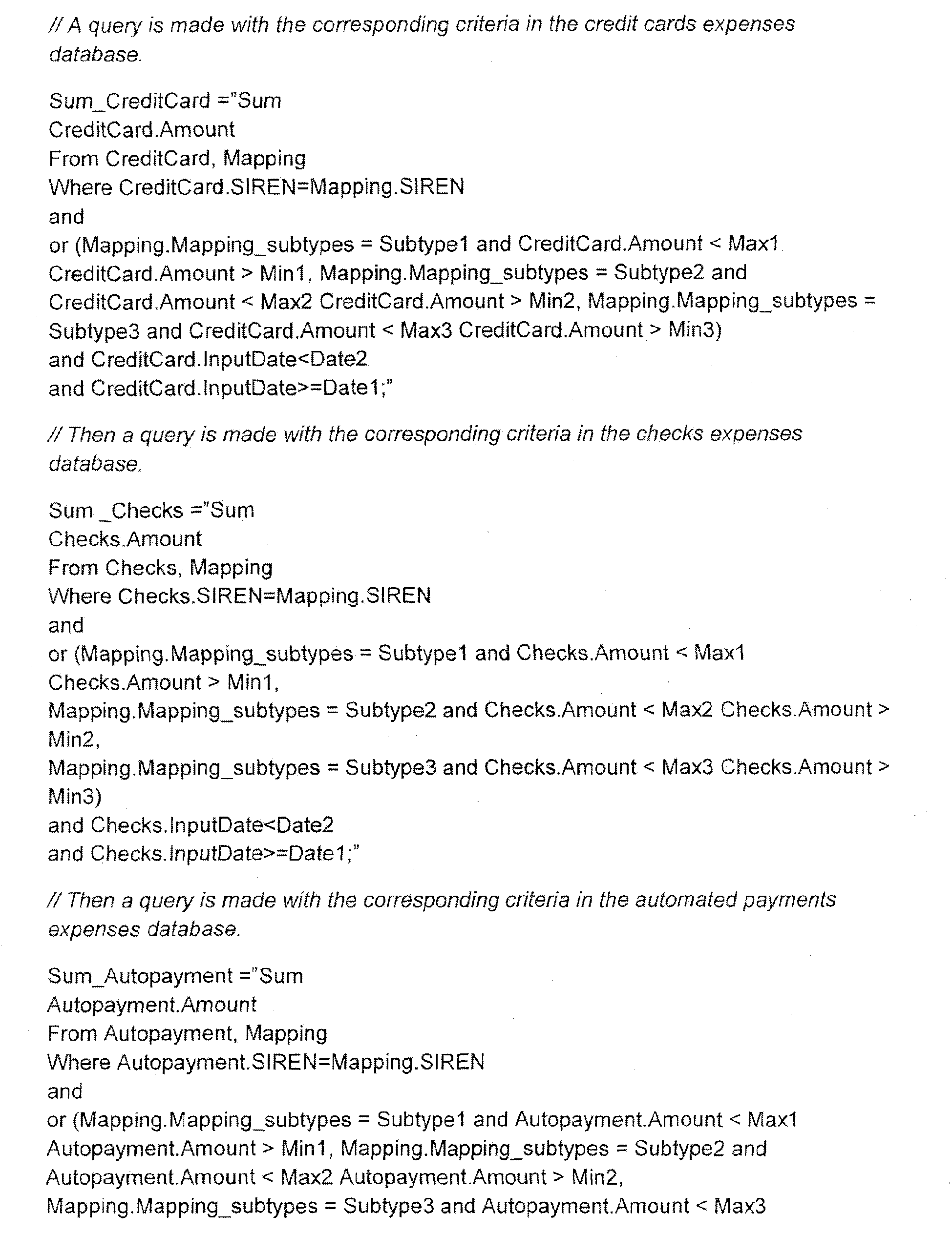

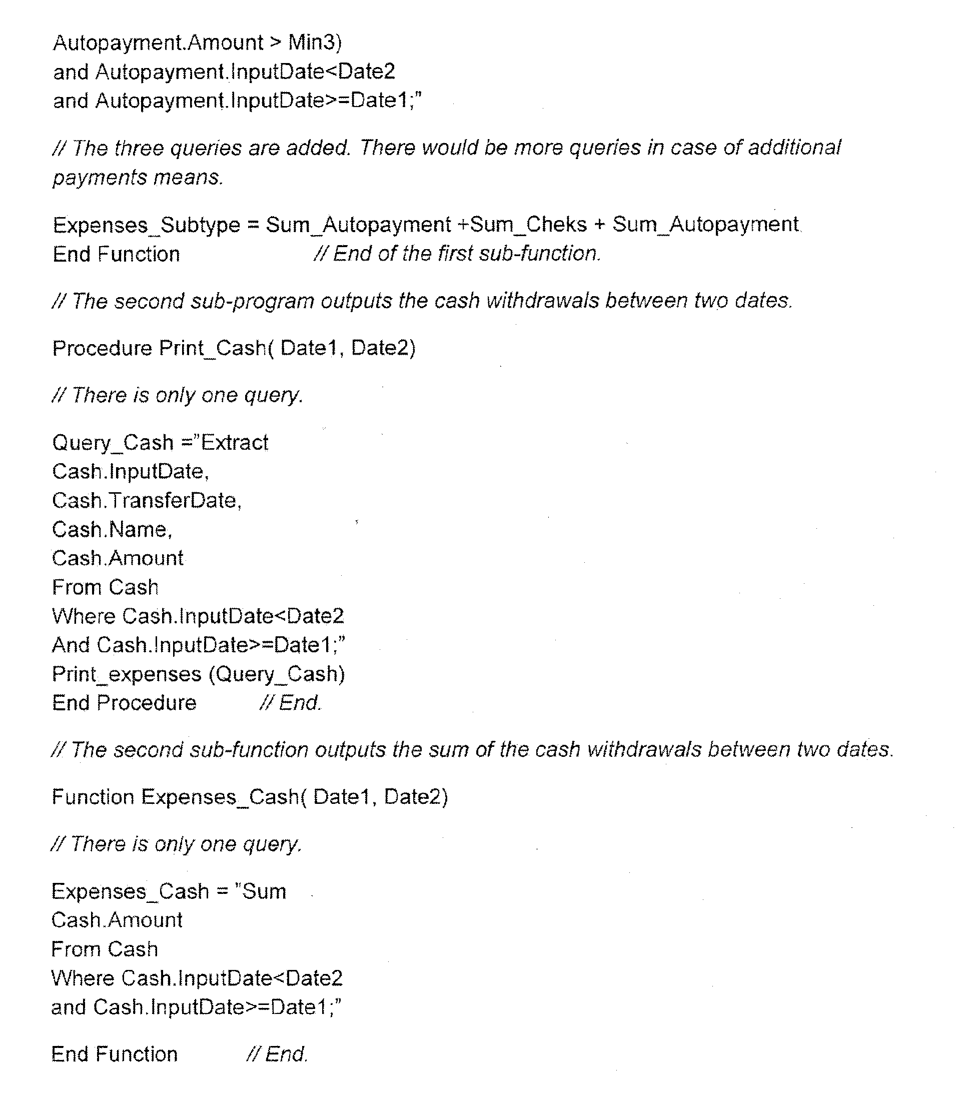

## Claims

1. Method for automatically classifying a transaction made on a bank account with a debtor or creditor firm, the method being **characterised by** the steps of:
- identifying the public registration code of the firm with which the money transfer is made, the code being a unique identification code of the firm and available to the transaction data;
- identifying a public sectorial code of the firm which identifies the sectorial activity of the firm;
- mapping the transaction with the identification code and the sectorial code;
- assigning a category to the transaction based on the sectorial code assigned thereto.

2. A method according to claim 1, wherein a category list is mapped with a public sectorial code list in order to automatically assign a category to each transaction.

3. A method according to claim 2, wherein the mapping between some sectorial codes and some categories is conditioned by the amount of the transaction and/or the debit or credit nature of the transaction.

4. A method according to claim 1, wherein a subtype list is mapped with a public sectorial code list and the automatic assignment of a category to a transaction is based on the subtype assigned to the transaction.

5. A method according to claim 4, wherein a category list is mapped with the subtype list.

6. A method according to claim 5, wherein the mapping between the category list and the subtype list is dependent on the amount of the transaction and/or the debit or credit nature of the transaction.

7. A method according to claim 6, wherein the transactions are debits of the bank account representing the expenses of the account's holder.

8. A method according to claim 6, wherein the transactions comprise credit/debit card payments, electronic payments, transfers and automated payments.

9. A method according to claim 6 comprising the additional step of summing by category the amounts of the transactions for a predetermined period of time.

10. A method according to claim 9, wherein the sums of the transactions by category are compared with the corresponding sums of one or more preceding periods.

11. A method according to claim 9, wherein the sums of the transactions by category are compared with corresponding average results.

12. A method according to claim 11, wherein the average results to which the sums of the transactions are compared by category correspond to the summed transactions of a virtual average person sharing with the bank account's holder a series of features.

13. A method according to claim 12, wherein the features shared with the virtual average person are comprised in the following none exhaustive list: age, gender, professional activity category, family situation, place of living, health state.

14. A method according one of claims 10-13, wherein the comparison between the sums of the transactions by category with corresponding amounts is expressed by means of at least a number and/or a sign for each category.

15. A method according to any preceding claims, comprising the additional step that an electronic report is generated and that the categorizing of the transactions can be manually modified.
